(19)

Europäisches
Patentamt
European
Patent Office
Office européen
des brevets

(11) **EP 1 881 690 A2**

(12) **EUROPEAN PATENT APPLICATION**

(43) Date of publication:
**23.01.2008 Bulletin 2008/04**

(51) Int Cl.:
***H04N 1/32*** *(2006.01)*

(21) Application number: **07112856.5**

(22) Date of filing: **20.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **21.07.2006 US 490565**

(71) Applicant: **Xerox Corporation
Rochester,
New York 14644 (US)**

(72) Inventors:
• **Wang, Shen-Ge
Fairport, NY 14450 (US)**
• **Eschbach, Reiner
Webster, NY 14580 (US)**

(74) Representative: **Grünecker, Kinkeldey,
Stockmair & Schwanhäusser
Anwaltssozietät
Maximilianstrasse 58
80538 München (DE)**

(54) **Digital watermarking process**

(57)    A method of embedding digital watermarks such as logos, letters or other types of user information into printed documents using different halftone textures. By alternating different halftone methods, such as different halftone screens or different error diffusion algorithms during the halftoning process, digital watermarks can be embedded into the input images at run time. The actual watermark is created by changing - on a pixel basis - the halftoning algorithm that is used in rendering the input image. No modifications to the input image are needed and the image data is reproduced correctly, but with a visible seem between different halftoning techniques.

FIG. 2

EP 1 881 690 A2

**Description**

## BACKGROUND

The exemplary embodiment described herein is directed to a process for applying a digital watermark to a sheet to enable verification of its authenticity and more particularly, to digital watermark patterns which are perceptibly visible or invisible.

Watermarks have been used in the printing industry to identify the source or origin of a document. Generally, a watermark appears as a faint pattern in an image, which is visible only when the original document is viewed in a particular manner. Unless one had access to the watermarked paper, it would be difficult to reproduce the document without showing that it was not authentic. That is to say, without the paper upon which the original image was originally printed, the copy should be readily detectable. However, as people move away from the use of watermarked papers for cost and other practical reasons, it is still necessary to identify the source or origin of a document image.

The introduction of the plain paper copier has resulted in a proliferation of paper copies of paper originals. A similar result is happening to electronic images, given the easy availability of digital scanners and a quick and widespread access to images throughout the Internet. It is now very difficult for the creator of an image to generate an electronic original, for which he can be assured that illegal copies will not be spread to third parties. The use of a digital watermark is a technology that aims to prevent that spread by incorporating an identifying mark within the image that allows one to identify the source of the image in an electronic copy. The identifying mark should not be disturbing or distracting to the original content of the image, while at the same time, it should allow for an easy identification of the source.

Watermark identification may be accomplished by embedding a digital watermark in a digital or printed page that will identify the owner of rights to the image. These images may be produced and delivered in hard copy or distributed mainly in digital form.

Watermarking can take two basic forms, visible or perceptible and invisible or imperceptible. Visible watermarks are marks such as copyright logos or symbols or logos that are imprinted into the digital or printed image to be distributed. The presence of the watermark is made clearly visible in the image in a way that makes it difficult to remove without damaging the image. The presence of the visible watermark does not harm the usefulness of the image, but it prevents the image from being used without permission. However, visible watermarks may interfere with the use of the image or with the image aesthetics. The visible watermark is also a potential target for fraud, in that it is possible for a fraudulent copier of the image to identify the location of the watermark and attempt to reproduce the image without the watermark.

Invisible watermarks are marks such as copyright symbols, logos, serial numbers, etc. that are embedded into digital or printed images in a way that is not easily discernible to the unaided eye. At a later time, the information embedded in these watermarks can be derived from the images to aid identification of the source of the image, including the owner and the individual to whom the image is sold. Such watermarks are useful for establishing ownership when ownership of an image is in dispute. They will be less likely to be useful as a deterrent to the theft of the image.

Digital simulation of traditional watermarks might be accomplished by changing density or color in selected areas of the input images. However, the changes made for watermarks depend on the density or color of the inputs and require additional processing, as described, for example, in U.S. Patent No. 5,530,759.

Accordingly, the exemplary embodiment disclosed herein contemplates a new and improved digital watermarking process that resolves the above-referenced difficulties and others.

## BRIEF DESCRIPTION

The exemplary embodiment disclosed herein may be used to embed digital watermarks such as logos, letters or other types of user information into printed documents using different halftone textures. By alternating different halftone methods, such as different halftone screens or different error diffusion algorithms during the halftoning process, digital watermarks can be embedded into the input images at run time. The actual watermark is created by changing - on a pixel basis - the halftoning algorithm that is used in rendering the input image. No modifications to the input image are needed and the image data is reproduced correctly, but with a visible seem between different halftoning techniques.

In one embodiment, a digital watermarking method is provided. The method comprises selecting a first halftone screen, selecting a second halftone screen, receiving a digital background image and a digital watermark image, reading a pixel in the digital background image and a corresponding pixel in the digital watermark image, determining whether the pixel in the digital watermark image is off or on, and processing the pixel in the digital background image according to the corresponding pixel in the digital watermark image.

In a further embodiment the first halftone screen comprises a first stochastic screen.

In another embodiment, a computer-readable recording medium which stores a digital watermarking program including instructions executable by the computer to perform a function for processing a digital document is provided. The instructions comprise selecting a first halftone screen, selecting a second halftone screen, receiving a digital background image and a digital watermark image; reading a pixel in the digital background image and a corresponding pixel in the digital watermark image, determining whether the pixel in the digital watermark image is off or on, and processing the pixel in the digital background image according to the corresponding pixel in the digital watermark image.

## BRIEF DESCRIPTION OF THE DRAWINGS

FIG. 1 is a data flow diagram depicting the flow of data in an image processing system and an associated digital printing system in which the exemplary embodiment may find particular use.

FIG. 2 is a schematic illustration of the components of a halftoning circuit in which the exemplary embodiment may be implemented.

FIG. 3 is a flowchart of a digital watermarking method.

FIG. 4 is a halftone image containing a digital watermark using phase shifted halftones, according to the exemplary embodiment.

FIG. 5 is a halftone image containing a digital watermark using two halftone dots of identical orientation but differing frequencies, according to the exemplary embodiment.

FIG. 6 is a halftone image containing a digital watermark using two different error diffusion weight sets, according to the exemplary embodiment.

FIG. 7 is a halftone image containing a digital watermark using two different halftoning methods, error diffusion and conventional halftoning, according to the exemplary embodiment.

FIG. 8 represents a halftoning system for producing stochastic screens.

FIG. 9 is an illustration of a halftone image produced by a well-designed stochastic screen.

FIG. 10 is an illustration of a pair of halftone images produced by a poorly-designed stochastic screen

FIG. 11 is an illustration of a watermark and the corresponding halftone output.

FIG. 12 is an illustration of an image halftoned by a watermark screen randomized with 1,000 swaps.

FIG. 13 is an illustration of an image halftoned by a watermark screen randomized with 3,000 swaps.

FIG. 14 is an illustration of an image halftoned by a watermark screen randomized with 10,000 swaps.

## DETAILED DESCRIPTION

The detailed description that follows is represented largely in terms of processes and symbolic representations of operations performed by conventional computer components, including a central processing unit (CPU), memory storage devices for the CPU, and connected pixel-oriented display devices. These operations include the manipulation of data bits by the CPU, and the maintenance of these bits within data structures that reside in one or more of the memory storage devices. Such data structures impose a physical organization upon the collection of data bits stored within computer memory and represent specific electrical or magnetic elements. These symbolic representations are the means used by those skilled in the art of computer programming and computer construction to most effectively convey teachings and discoveries to others skilled in the art.

For the purposes of this discussion, a process is generally conceived to be a sequence of computer-executed steps leading to a desired result. These steps generally require physical manipulations of physical quantities. Usually, though not necessarily, these quantities take the form of electrical, magnetic, or optical signals capable of being stored, transferred, combined, compared, or otherwise manipulated. It is conventional for those skilled in the art to refer to these signals as bits, values, elements, symbols, characters, terms, objects, numbers, records, files or the like. It should be kept in mind, however, that these and similar terms should be associated with appropriate physical quantities for computer operations, and that these terms are merely conventional labels applied to physical quantities that exist within and during operation of the computer.

In addition, it should be understood that the programs, processes, methods, etc. described herein are not related or limited to any particular computer or apparatus. Rather, various types of general purpose machines may be used with programs constructed in accordance with the teachings described herein. Similarly, it may prove advantageous to construct specialized apparatus to perform the method steps described herein by way of dedicated computer systems with hardwired logic or programs stored in nonvolatile memory, such as read only memory.

For a general understanding of the exemplary embodiment, reference is made to the drawings. In the drawings, like reference numerals have been used throughout to designate identical elements. In describing the exemplary embodiment, the following term(s) have been used in the description.

The term "data" refers herein to physical signals that indicate or include information. When an item of data can indicate one of a number of possible alternatives, the item of data has one of a number of "values." For example, a binary item of data, also referred to as a "bit," has one of two values, interchangeably referred to as "1" and "0" or "ON" and "OFF" or "high" and "low."

An "image" is a pattern of physical light. To "render" or "print" a color image is to mark a substrate with at least two and preferably three or more colorants (e.g., inks, toners, pigments, etc.) so as to form a full color image from the visual integration of the colorants. As used herein, the primary marking colors are understood to include cyan, magenta, yellow and possibly black. However, it is well understood that the pigments or colorants employed to produce the full color image on a substrate may vary.

A "pixel" is the smallest segment into which an image is divided in a given system. Each pixel value is a bit in a "binary form" of an image, a gray scale value in a "gray scale form" of an image, or a set of color space coordinates in a "color coordinate form" of an image, the binary form, gray scale form, and color coordinate form each being a two-dimensional array defining an image.

An "image input device" or "image input terminal" (IIT) is a device that can receive an image and provide an item of data defining a version of the image. A "scanner" is an image input device that receives an image by a scanning operation, such as by scanning a document.

An "image output device" or "image output terminal" (IOT) is a device that can receive an item of data defining an image and provide the image as output. A "display" is an image output device that provides the output image in human viewable form. The visible pattern presented by a display is a "displayed image" or simply "image."

In the digital reproduction of documents, image information, be it color, black, or white, is commonly generated in a raster format where the raster comprises a plurality of continuous tone or gray level pixels, *i.e.*, pixels that are defined by digital values, each value representing a gray level among a number of gray levels. Thus, in an 8 bit system, 256 levels of gray are present, where each level represents an increment of gray between white and black. Each separation includes 256 levels of information and there may be more than 16 million colors defined by a gray raster. Usually, rasters in such a gray level format are unprintable by standard printers. Standard printers print in a limited number of levels, either a spot or a no spot in the binary case, or a limited number of levels associated with the spot, for example, four in the quaternary case. Accordingly, it is a limited number of levels that are printable. Besides gray level information derived by scanning, certain processing techniques such as those described may produce gray level data requiring quantization for printing, as described, for example, in U.S. Pat. No. 5,226,094 to Eschbach, which is hereby incorporated by reference for its teachings.

Thus, given a color separation with 256 shades of each additive primary color, a set of binary printer signals must be produced representing the contone effect. This process is generally referred to as *halftoning.* Halftoning is used to reduce the number of quantization levels per pixel in a digital image while maintaining the gray appearance of the image at normal reading distance. Halftoning techniques are widely employed in the printing and display of digital images. Halftoning techniques are necessary because the physical processes involved are binary in nature or the processes have been restricted to binary operation for reason of cost, speed-memory, or stability in the presence of process fluctuations. Examples of such processes are: most printing presses; ink jet printers; binary cathode ray tube displays; and laser xerography.

As described more fully below, by alternating different halftone methods, such as different halftone screens or different error diffusion algorithms during the halftoning process, digital watermarks can be embedded into the input images at run time. The actual watermark is created by changing - on a pixel basis - the halftoning algorithm that is used in rendering the input image.

Classical screening, which is the oldest halftoning method in printing, applies a periodic mask of thresholds to each color of the multi-bit image. The thresholds may be stored as a dither matrix and the repetitive pattern generated by this matrix is considered a halftone cell as taught, for example, in U.S. Pat. No. 4,149,194 to Holladay, which is hereby incorporated by reference for its teachings. Pixels can be converted to zero (black) if they are below the threshold or one (white) otherwise. With the continuous-tone (high-resolution) images taking pixel values from 0 to 1 inclusive, a mask of M pixels has thresholds 0, 1/M, 2/M, ..., 1, which supports M + 1 intensity levels. The ordering of the thresholds in the mask has a significant effect on the visual quality of the halftone. At mid-gray, half of the pixels in the mask would be turned on, and half would be turned off. A cluster dot screen would cluster the dots in a connected way, which helps mitigate ink spread when printed. A dispersed dot screen would spread out the dots, which is well suited for low-cost displays.

To a very rough approximation as a linear spatially-invariant system, the human visual system is lowpass. With respect to noise in still images, the human visual system is in general less sensitive to uncorrelated high-frequency noise than uncorrelated low-frequency noise. Dithering with blue noise (i.e. high-frequency noise) attempts to place the quantization noise from the halftoning process into the higher frequencies. Noise shaping is a characteristic of error diffusion as described below, but large periodic masks of thresholds (e.g. 128 x 128 pixels) can be designed to produce halftones with blue noise.

Algorithms that convert gray images to binary or other number of level images without repeating patterns exist, and include among them error diffusion, as taught, for example, in U.S. Pat. No. 5,045,952 to Eschbach, which is hereby incorporated by reference for its teachings. Error diffusion produces halftones of generally higher quality than classical screening, with the tradeoff of requiring more computation and memory. Screening amounts to pixel-based thresholding, whereas error diffusion requires a neighborhood operation and thresholding. The neighborhood operation distributes the quantization error due to thresholding to the unhalftoned neighbors of the current pixel. The term "error diffusion" refers to the process of diffusing the quantization error along the path of the image scan. In the case of a raster scan, the quantization error diffuses across and down the image. Qualitatively speaking, error diffusion accurately reproduces the graylevel in a local region by driving the average error to zero through the use of feedback.

Stochastic screening, or non-periodic screening, is an alternative to conventional clustered dot screens. Instead of producing dots that grow with increased colorant on paper, the stochastic screening method produces a well-dispersed pattern of isolated dots at spaced pixel locations. Thus, there is no fundamental periodicity in the dots; instead, the design of the screen attempts to produce patterns with pleasant noise characteristics. The pleasant noise characteristics are achieved by designing the screen so as to distribute the noise energy in the region of high spatial frequency, where the human visual system has a significantly reduced sensitivity. In this respect, U.S. Pat. No. 5,673,121 to Wang, which is hereby incorporated by reference for its teachings, discloses a stochastic halftone screening method for designing an idealized stochastic screen and is herein incorporated by reference as it discloses a particular stochastic screen useful in implementation of the exemplary embodiment, as will be more fully explained below. One of the advantages of stochastic screening, or non-periodic screening, over periodic screening is the suppression of moire.

These halftone methods may be classified into three categoriesamplitude modulation (AM), frequency modulation (FM) and AM-FM hybrid halftoning. In AM halftoning, the dot size is varied depending on the graylevel value of the underlying grayscale image while the dot frequency is held constant, e.g. clustered-dot ordered dither. FM halftones have a fixed dot size and shape, but the frequency of the dots varies with the graylevel of the underlying grayscale image. Conventional digital FM halftones have a fixed dot size of one pixel, e.g. those produced by dispersed-dot ordered dither and error diffusion. AM-FM halftones have variable dot shape/size, and variable dot frequency that depends on the graylevel value to be reproduced. Examples of AM-FM halftones include "green-noise" halftones, halftones on space filling curves, and halftones with texture control.

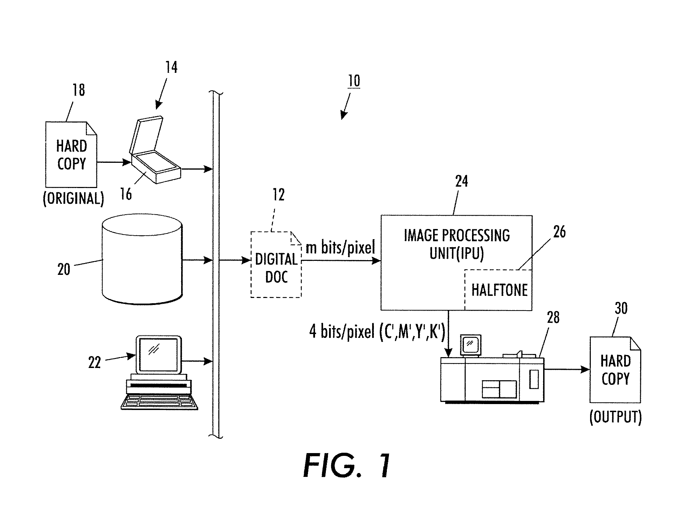

Referring now to FIG. 1, depicted therein is a data flow diagram for a xerographic or similar printing system 10 suitable for implementing aspects of the exemplary embodiment. The printing system 10 preferably receives a digital document image 12 generated from one of a plurality of image input terminals 14, including but not limited to an scanner 16 for digitizing hardcopy original document 18, a storage device 20 or a computer workstation 22. Once represented in a digitized format, preferably a multilevel signal (m) for each of three colors (*e.g.*, 24-bit or 8 bits/separation), data is passed or otherwise transferred to an image processing unit (IPU) 24. The IPU 24 comprises a processing unit (or CPU) dedicated to performing various programmable operations on the image signals supplied thereto or application specific integrated circuitry adapted to provide various image processing features as described, for example, U.S. Patent No. 5,608,821 to Metcalfe et al., the relevant portions of which are hereby incorporated by reference for its teachings.

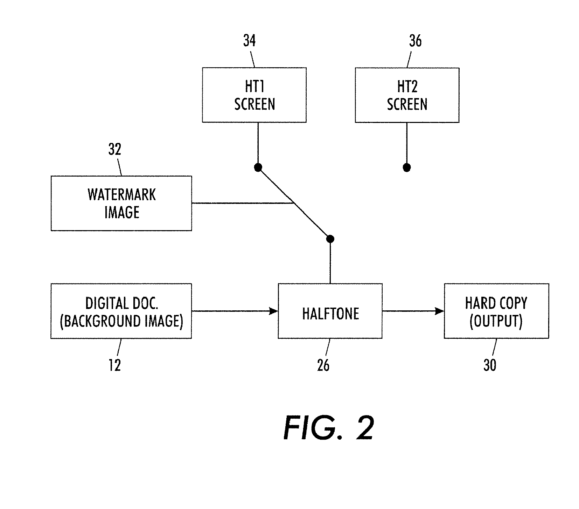

Included in the IPU 24 is a halftoning circuit 26 that operates on *m*-level input signals to produce an n-level output signal for each color separation, where n is less than m, and where n is typically one bit per pixel per color. Further details of the operation of the halftoning circuit 26 are described with respect to FIG. 2 below. The halftoned image signals (*e.g.*, C', M', Y', and K') are then passed to an image output terminal (IOT) 28 represented in FIG. 1. Once received by the image output terminal, the halftoned image data is employed to control the placement of colorants on a substrate passing through to render a hard copy output 30. The exemplary embodiment has been described with respect to a four-color image processing system. It will be appreciated that the exemplary embodiment is also applicable to a single color separation or black and white reproduction situations as well.

The digital watermarks generated by the exemplary embodiment may be viewed as the contrast between different halftone textures. In order to do this, the image is halftoned in the standard image path, with one modification, as shown in FIG. 2, which shows the operational characteristics of the halftoning circuit 26. This modification allows a watermark image 32 to influence which halftone screen or method - *i.e.,* a Halftone 1 (HT1) Screen 34 or a Halftone 2 (HT2) screen 36 - is selected for a given pixel, as described more fully below.

The visibility of the watermark on the hard copy output 30 is therefore a function of the two halftone screens, HT1 and HT2. In general, it may be said that the digital watermark is more visible the more the halftone dots differ or when different halftone methods are used and less visible if HT1 and HT2 are similar in appearance. Thus, the visual effect of a digital watermark can be achieved by locally modifying the halftoning algorithm, either by changing algorithm parameters, such as screen frequency or orientation, or by changing between different halftoning methods all together. This allows flexible watermarks that can be obtained without modifying or altering the input data.

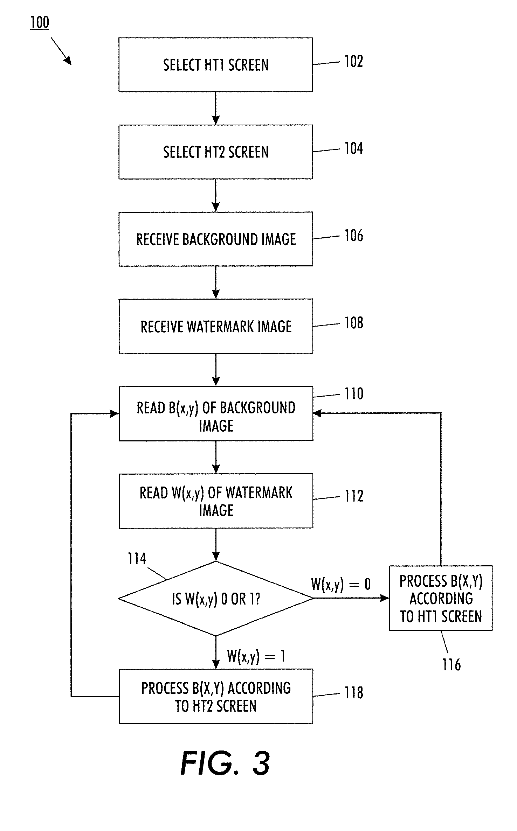

We turn now to FIG. 3, wherein a flowchart of a digital watermarking method is shown. Initially, at least two halftone screens (HT1 and HT2, for example) are to be selected (102, 104). The halftone screens (HT1 and HT2) may be chosen from among any of the known halftone methods described herein and in other references. The types of halftone screens selected simply affects the visibility of the digital watermark in the background image. Thus, it is perfectly acceptable for the two halftone screens HT1 and HT2 to be generated by different methods. Next, both the digital background image 12 and the digital watermark image 32 are received (106, 108). It is to be understood that these first four steps may be achieved in any particular order.

Next, a pixel in the background image, *i.e.*, B(x, y), is read (110) and a corresponding pixel in the watermark image, *i.e.*, W(x, y), is read (112). From there, a determination is made as to whether W(x, y) is 0 or 1 (i.e., whether it is "off" or "on")(114). For example, if W(x, y) is 0 (or "off"), then B(x, y) is processed according to the HT1 screen 34 (116). However, if W(x, y) is 1 (or "on"), then B(x, y) is processed according to the H2 screen 36 (118). Of course, it is to be understood that these steps are to be repeated until each pixel in the images has been read. Once each pixel from the two images 12, 32 has been read, the final watermarked image 30 may be printed.

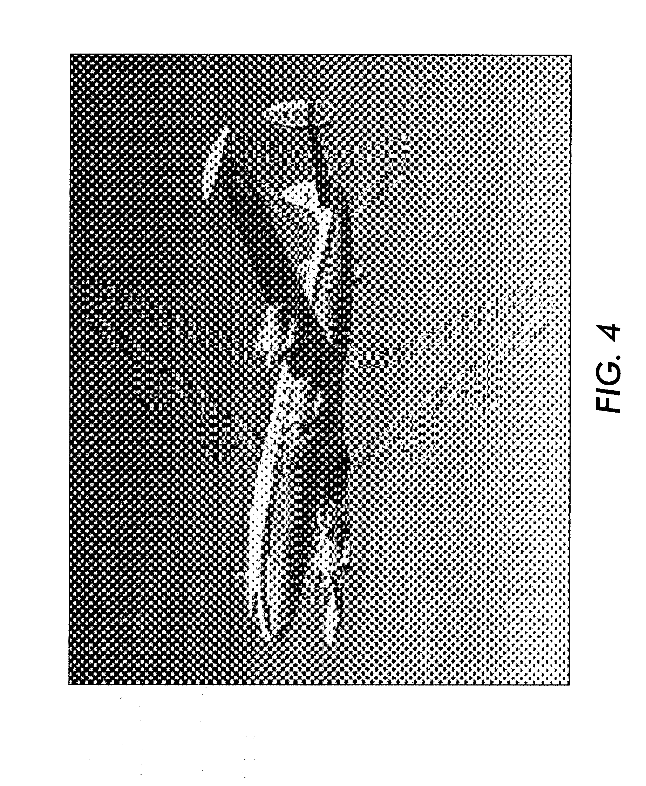

FIGS. 4-7 show some examples of different digital watermarks, showing the changes in visibility that can easily be achieved. For example, FIG. 4 is a halftone image containing a digital watermark using phase shifted halftones. In this case, the standard V44.dot at a 4 pixel shifted version.

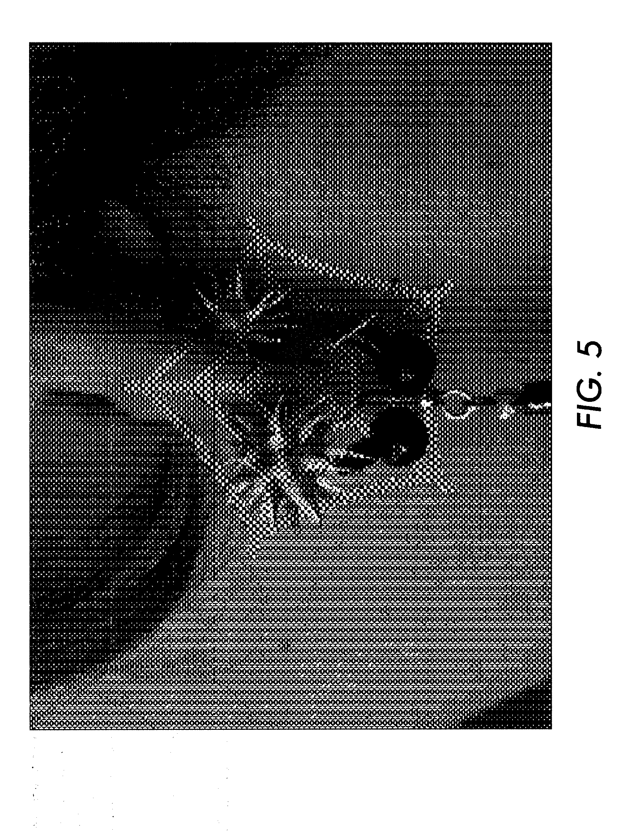

FIG. 5 is a halftone image containing a digital watermark using two halftone dots of identical orientation but different frequency. Thus, FIG. 5 shows the effect of using V44.dot and V33.dot (all with reference to the sandpiper halftone dot set). The two dots are matched in angle (45°) but have different frequencies.

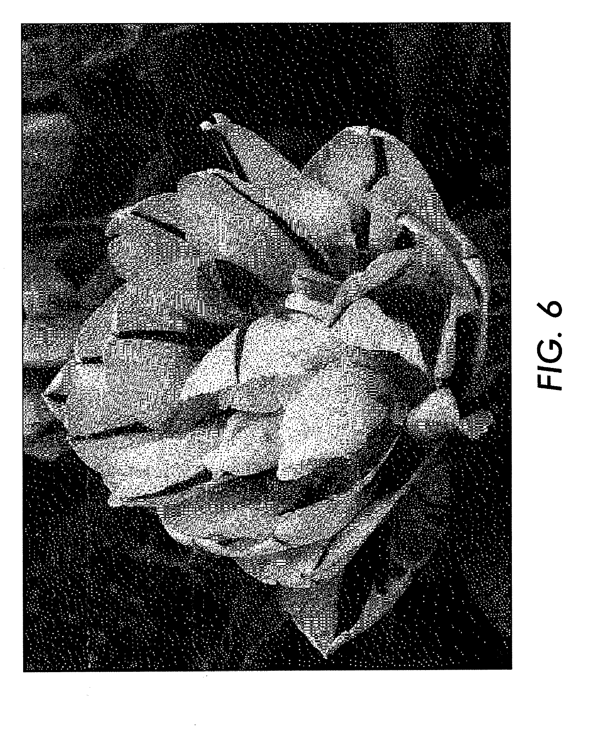

FIG. 6 is a halftone image containing a digital watermark using two different error diffusion weight sets. The watermark is almost unobtrusive, but it can easily be verified under closer inspection.

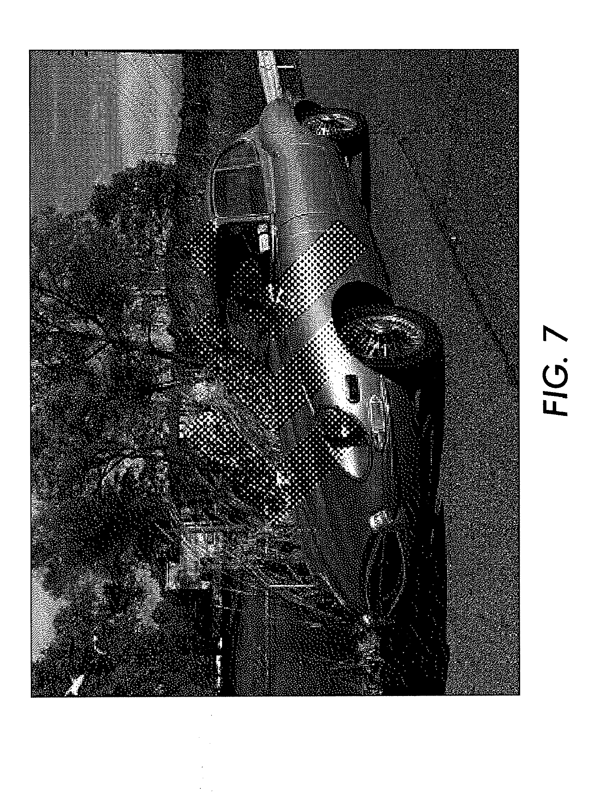

FIG. 7 is a halftone image containing a digital watermark using two different halftoning methods, *i.e.*, error diffusion and conventional halftoning. The image is binarized using standard air diffusion and the watermark is created using conventional halftoning with the V33.dot.

As a further example, it is possible to embed logos into printed documents using modified stochastic screens. The marks have controllable visibilities and are difficult to remove. Since the watermark is embedded into a halftone screen, which can replace and perform exactly as the original halftone screen, no extra processing is need to halftone imprint images for embedding the desired watermark. Further, the visibility of embedded watermarks can be varied depending on the applications. The watermark is viewed as the contrast between the normal halftone output with a well designed stochastic order and the output with a slightly disordered distribution. The visibility is controlled by the number of swaps applied to the modified stochastic screen.

Now, as described in previous patents on stochastic screens, it is a quite complicated optimization process to design a stochastic halftone screen. See, for example, U.S. Patent No. 5,673,121 to Wang.

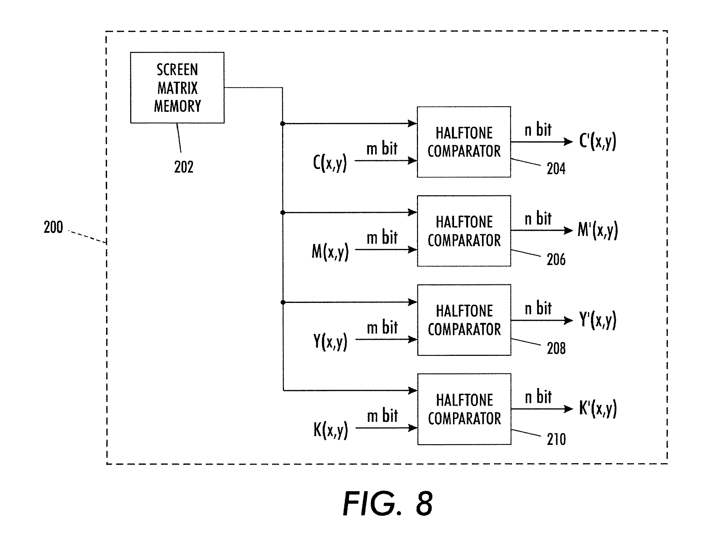

FIG. 8 shows a halftone processor 200 operational characteristics. In this example, there is illustrated a color processing system with four separations, C(x, y), M(x, y), Y(x, y), K(x, y), obtained and each processed independently for halftoning purposes to reduce an m-bit input to an n-bit output. This process is also applicable to the "single separation" or black and white reproduction situation as well. A source of screen matrix information, screen matrix memory 202, which provides one input to each comparator 204, 206, 208, and 210 for each separation, where the other comparator is the m bit separation bitmap. The output is m bit output, which can be directed to a printer. This illustration is highly simplified, in that distinct screen matrices may be supplied to each comparator.

We shall consider the method of generating halftone images from constant gray-scale inputs by a screen matrix with N elements. If the overlap between adjacent pixels is ignored, the screen cell with n black pixels and N-n white pixels simulates the input with a gray scale (g) equal to $g=(N-n)/N$, where $0<n<N$, or $0<g<1$. The visual appearance of this pattern depends on whether the black pixels or the white pixels are minorities. If the black pixels are, *i.e.*, $0.5<g<1.0$, the best visual appearance of the halftone pattern occurs when all black pixels are "evenly" distributed, in other words, each black pixel should "occupy" 1/n, or $1/(1-g)N$, fraction of the total area of the screen. Therefore, the average distance of adjacent black pixels should be equal to $\alpha(1-g)^{-1/2}$, where $\alpha$ is independent of gray levels. On the other hand, if the white pixels are minorities, *i.e.*, $0<g<0.5$, each white pixel should "occupy" 1/(N-m) or 1/gN, fraction of the total area and the average distance of adjacent white pixels should be equal to $\alpha g^{-1/2}$. An idealized stochastic dithering screen is defined as a threshold mask generating halftone images which satisfy above criterion for all gray levels.

For the following discussion, the input gray-scale images are specified by integer numbers, G(x, y), where $0<G<M$. Under this assumption the dithering screen should have M different threshold values spanning from zero to M-1. We further assume that at each level there are (N/M) elements having the same threshold value T. The ultimate goal of designing a stochastic screen is to distribute the threshold values T so that the resulting halftone images are as close as possible to the ones generated by an idealized stochastic screen. Here, it is demonstrated that it is possible to create "good quality" stochastic screens using above criterion and optimization techniques.

Choosing an arbitrary pair of pixels from the dithering screen, we assume that the threshold values for these two pixels are $T_1=T(x_1, y_1)$ and $T_2=T(x_2, y_2)$, respectively, where $(x_1, y_1)$ and $(x_2, y_2)$ are the coordinates of these pixels. As the result of dithering a constant input G, the outputs $B_1=B_1(x_1, y_1)$ and $B_2=B_2(x_2, y_2)$ have the following possible combinations:

    1. $B_1=1$ and $B_2=1$, if $G>T_1$ and $G>T_2$;
    2. $B_1=0$ and $B_2=0$, if $G<T_1$ and $G<T_2$;
    3. $B_1 \neq B_2$,

where B=1 represents a white spot and B=0, a black spot for printing Under case 3, where one output pixel is black and another is white, their distance is irrelevant to the visual appearance according to the criterion discussed above. For case 1, we can further consider the difference between the two situations:

1a. if $M/2>G$, $G> T_1$, $G> T_2$;
1b. elsewhere.

Under case 1 a, both output pixels are white, and white spots are minorities. Therefore, the corresponding distance between $(x_1, y_1)$ and $(x_2, y_2)$ is relevant to the visual appearance of the halftone images. According to our analysis above this distance is greater or equal to $\alpha g^{-1/2}$, or $\alpha(G/M)^{-1/2}$, for outputs of an idealized stochastic screen. Among all G under case 1a, the critical case of G is the smallest one, or $G_c=Max(T_1, T_2)$, which requires the largest distance between the two pixels $(x_1, y_1)$ and $(x_2, y_2)$.

Similarly, when both dots appear as black dots, the visual appearance under the following cases must be considered:

2a. if $G<M/2$; $G> T_1$ and $G> T_2$
2b. elsewhere.

Among all G under 2a, the largest G is given by $G_c =Min(T_1, T_2)$, which requires the largest distance $\alpha(1-G_c/M)^{-1/2}$ between $(x_1, y_1)$ and $(x_2, y_2)$.

Mathematically, we can use a merit function $q(T_1, T_2)$ to evaluate the difference between the idealized stochastic screen and the chosen one. For example, we used the following choice for the experiment described later: where

$$d^2 =( x_1, y_1)^2 +(y_1-y_2)^2 ;$$

$$d_c{}^2=M/[M-Min(T_1, T_2)], \text{ if } T_2>M/2 \text{ and } T_1>M/2,$$

$$d_c{}^2=M/Max(T_1, T_2), \text{ if } T_2<M/2, \text{ and } T_1<M/2,$$

$$d_c{}^2=0, \text{ i.e., } q=0, \text{ elsewhere;}$$

and C is a constant.

Since a dithering screen is used repeatedly for halftoning images larger than the screen, for any chosen pair of pixels from the dithering screen the closest spatial distance in corresponding halftone images depends on the dithering method and should be used for the merit function. The overall merit function should include contributions of all possible combinations. In an experiment the summation of $q(T_1, T_2)$ was for optimization.

Now, the design of stochastic screens becomes a typical optimization problem. When the threshold values of a chosen screen are rearranged, the merit function can be evaluated to determine the directions and steps. Many existing optimization techniques can be applied to this approach. The simplest method is to randomly choose a pair of pixels and swap threshold values to see if the overall merit function Q is reduced, since only those q values related to the swapped pair need to be recalculated, the evaluation of Q does not consume significant computation time.

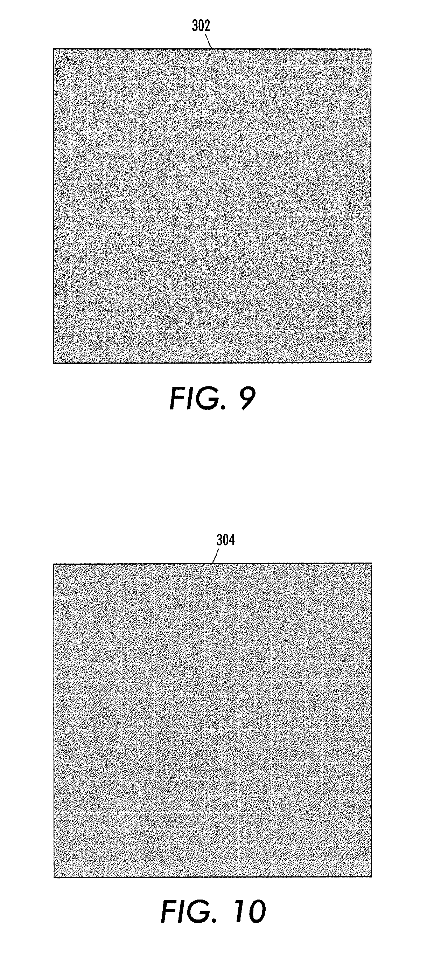

With reference now to FIG. 9, the halftone output 302 of a well designed stochastic screen is presented as disbursed dots with desired stochastic distributions. However, the process of reversing the optimization process to get a poor screen is somewhat simpler and can be achieved by repeatedly and randomly selecting two elements of the halftone screen and swapping their threshold values. By contrast, as shown in FIG. 10, the halftone output 304 by a poorly designed screen is seen as a dot distribution with disorders. Although the two halftone patches 302, 304 shown in FIGS. 9 and 10 may represent the same average density level, the visual difference is clearly seen. As a matter of fact, the poor screen used for the patch 304 is a result of conducting 5,000 random swappings to a well designed stochastic screen.

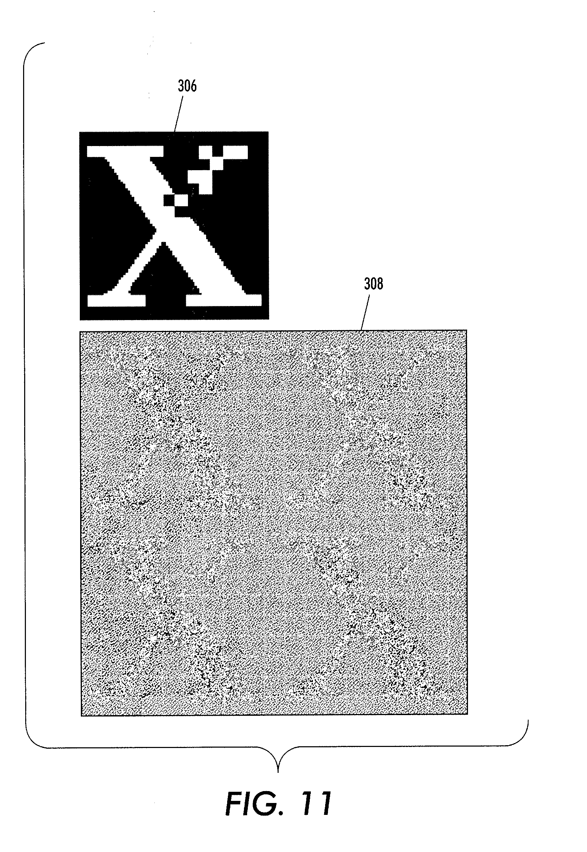

Instead of conducting random swapping on the entire stochastic screen, the process may be applied to certain selected areas only. For example, if the randomization supplied to the white area of the logo 306 shown in FIG. 11, the corresponding halftone output 308, shown on the right, displays the simulated watermarks as the screen repeatedly applied four times.

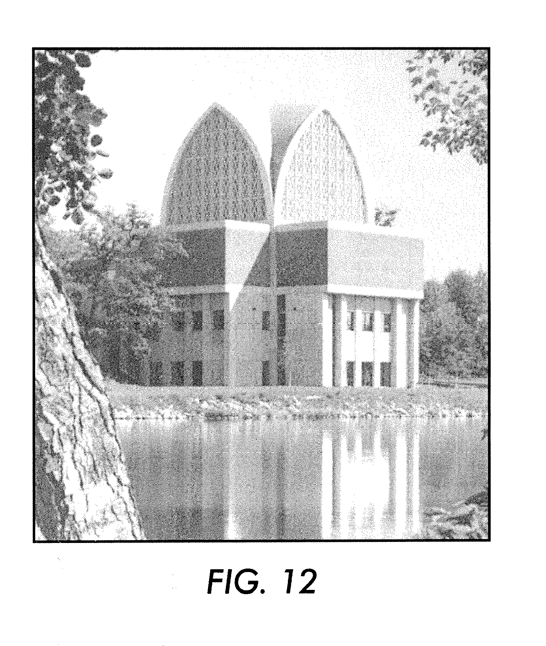

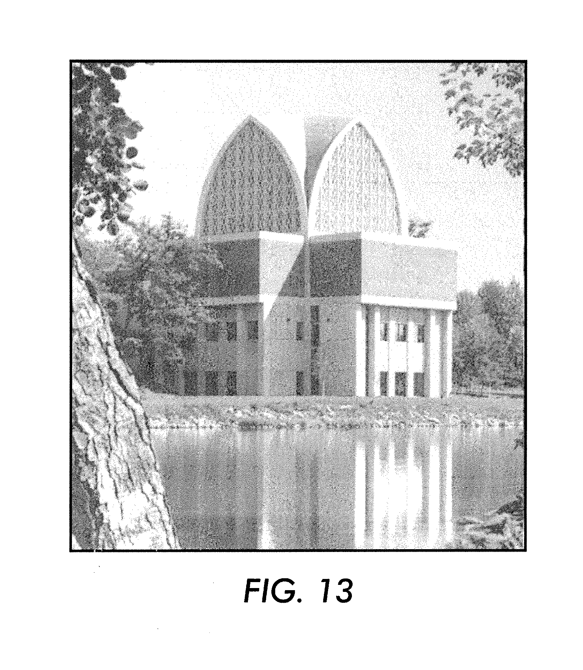

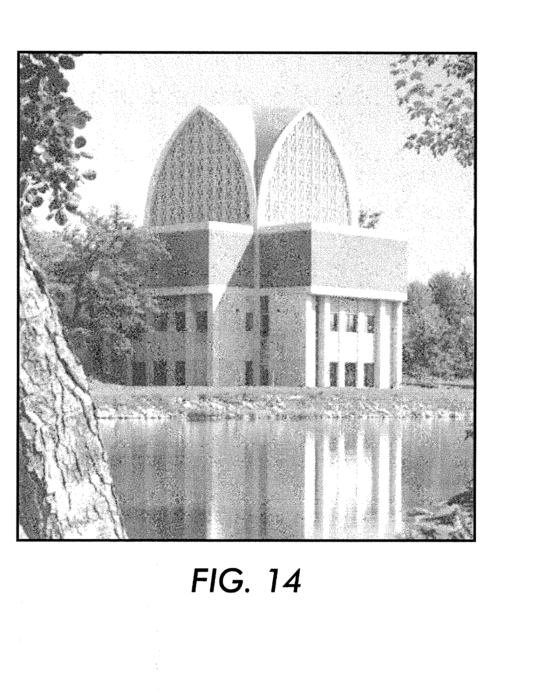

FIGS. 12-14 show a chapel image halftoned by different screens. These three figures are watermark screens with different visibilities, controlled by the number of random swappings. For example, FIG. 12 is an image halftone by a watermark screen randomized with 1,000 swaps. FIG. 13 is an illustration of an image halftone by a watermark screen randomized with 3,000 swaps. And FIG. 14 is an illustration of an image halftone by a watermark screen randomized with 10,000 swaps. It should also be noted that a watermark screen may be used only once or a few times, while the original stochastic screen may be used for the rest of the processing. Therefore, the watermark will be shown only at the desired locations.

**Claims**

1.  A digital watermarking method comprising:

    selecting a first halftone screen;
    selecting a second halftone screen;
    receiving a digital background image and a digital watermark image;
    reading a pixel in the digital background image and a corresponding pixel in the digital watermark image;
    determining whether the pixel in the digital watermark image is off or on; and
    processing the pixel in the digital background image according to the corresponding pixel in the digital watermark image.

2.  The digital watermarking method defined in claim 1 further comprising:

    printing a final watermarked image once each pixel in the digital images has been read.

3.  The method defined in claim 1 wherein the processing step further comprises:

    processing the pixel according to the first halftone screen where the pixel in the digital watermark image is off.

4.  The method defined in claim 1 wherein the processing step further comprises:

    processing the pixel according to the second halftone screen where the pixel in the digital watermark image is on.

5.  The method defined in claim 4 wherein the processing step further comprises:

    processing the pixel according to the first halftone screen where the pixel in the digital watermark image is off.

6.  The method defined in claim 1 wherein the first and second halftone screens are generated by different halftoning methods.

7.  The method defined in claim 6 wherein the first stochastic screen is generated by:

    a. initially assigning a set of threshold signals varying across a range of gray levels to locations in a screen matrix, each threshold signal defined by value and position in the matrix;
    b. selecting at least two threshold signals in said screen matrix;
    c. for a selected halftone level, characterizing the uniformity of distribution of spots through the halftone screen cell;
    d. swapping the two threshold signal positions in the screen matrix;
    e. recharacterizing the uniformity of distribution of spots through the halftone screen cell;
    f. as a function of the recharacterization, selecting one of maintaining the threshold signals in the swapped positions on the halftone screen and otherwise returning the threshold values to the initial positions; and
    g. repeating steps b) through f) a preselected number of times.

8.  The method defined in claim 7 wherein the second halftone screen comprises a second halftone screen.

9. The method defined in claim 8 wherein the second halftone screen is generated by repeatedly and randomly selecting two elements of the first halftone screen and swapping their threshold values.

10. A computer-readable recording medium which stores a digital watermarking program including instructions executable by the computer to perform a function for processing a digital document according to any of claims 1 to 9.

*FIG. 1*

34
36

HT1
SCREEN

HT2
SCREEN

32

WATERMARK
IMAGE

DIGITAL DOC.
(BACKGROUND IMAGE)

HALFTONE

HARD COPY
(OUTPUT)

12
26
30

*FIG. 2*

<u>100</u>

```
         ┌─────────────────────┐
         │   SELECT HT1 SCREEN  │──── 102
         └─────────────────────┘
                    │
                    ▼
         ┌─────────────────────┐
         │   SELECT HT2 SCREEN  │──── 104
         └─────────────────────┘
                    │
                    ▼
         ┌─────────────────────┐
         │ RECEIVE BACKGROUND IMAGE │──── 106
         └─────────────────────┘
                    │
                    ▼
         ┌─────────────────────┐
         │ RECEIVE WATERMARK IMAGE │──── 108
         └─────────────────────┘
                    │
                    ▼
         ┌─────────────────────┐
         │ READ B(x,y) OF BACKGROUND │──── 110
         │        IMAGE        │
         └─────────────────────┘
                    │
                    ▼
         ┌─────────────────────┐
         │ READ W(x,y) OF WATERMARK │──── 112
         │        IMAGE        │
         └─────────────────────┘
                    │
                    ▼
              ◇ 114
        IS W(x,y) 0 OR 1?   ──W(x,y) = 0──▶  PROCESS B(X,Y)
                                             ACCORDING
                    │                        TO HT1 SCREEN
              W(x,y) = 1                          116
                    │
                    ▼
         PROCESS B(X,Y) ACCORDING ──── 118
            TO HT2 SCREEN
```

# FIG. 3

FIG. 4

FIG. 5

*FIG. 6*

*FIG. 7*

**FIG. 8**

302

## FIG. 9

304

## FIG. 10

FIG. 11

FIG. 12

FIG. 13

FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5530759 A
- US 5226094 A, Eschbach
- US 4149194 A, Holladay
- US 5045952 A, Eschbach
- US 5673121 A, Wang
- US 5608821 A, Metcalfe